# EUROPÄISCHE PATENTANMELDUNG

(11) **EP 3 165 917 A1**
(43) Veröffentlichungstag der Anmeldung: **10.05.2017**
(21) Anmeldenummer: 15192731.6
(22) Anmeldetag: 03.11.2015
(51) Int. Cl.: G01N 31/00, G01N 35/02, G01N 35/00

(54) **VERFAHREN FÜR DIE ANALYSE VON IN EINEM REAGENZGLAS ENTHALTENEN INHALTSSTOFFEN UND ZUR DURCHFÜHRUNG DES VERFAHRENS GEEIGNETE VORRICHTUNG**

(71) Anmelder: C. Gerhardt GmbH & Co. KG, 53639 Königswinter (DE)
(72) Erfinder: Macke, Jan, 53639 Königswinter (DE)
(74) Vertreter: Grünecker Patent- und Rechtsanwälte PartG mbB

(57) **Zusammenfassung**

Die vorliegende Erfindung betrifft ein sich auf engem Raum und daher mit einer kompakten Vorrichtung durchführbares Verfahren für die Analyse von in einem Reagenzglas (42) enthaltenen Inhaltsstoffen, bei dem aus einem mehrere Reagenzgläser (14) aufweisenden Beschickungsbereich (8) ein Reagenzglas (42) ausgewählt, gegriffen und zur chemischen Analyse bei im wesentlichen vertikaler Ausrichtung des ausgewählten Reagenzglases (42) dichtend gegen einen Stutzen (30) angelegt wird, wobei das ausgewählte Reagenzglas (42) mit einem Greifelement (16) aus dem Beschickungsbereich (8) verbracht und bis unter den Stutzen (30) geführt und danach von einem das Reagenzglas (42) in seiner Längsrichtung gegen den Stutzen (30) drückenden Anpresselement (50) dichtend an den Stutzen (30) angesetzt wird. Die erfindungsgemäße Vorrichtung hat ein Gehäuse (2), das einen Beschickungsbereich (8) zur Aufnahme mehrerer Reagenzgläser (14), eine mit einer Analyseeinrichtung (32) verbundene Probennahmeeinheit (28) mit einem Stutzen (30) zur dichtenden Anlage eines ausgewählten Reagenzglases (42), ein das ausgewählte Reagenzglas (42) greifendes Greifelement (16), das von dem Beschickungsbereich (8) zu dem Stutzen (30) beweglich ist, und ein das Reagenzglas (42) in seiner Längsrichtung gegen den Stutzen (30) drückendes Anpresselement (50) in sich aufnimmt.

## Beschreibung

Die vorliegende Erfindung betrifft ein Verfahren und eine Vorrichtung für die Analyse von in einem Reagenzglas enthaltenen Inhaltsstoffen. Dabei will die vorliegende Erfindung insbesondere ein entsprechendes Verfahren und eine Vorrichtung angeben, die sich zur Stickstoffanalyse nach Kjeldahl eignet.

Bei der Stickstoffbestimmung nach Kjeldahl wird eine stickstoffhaltige Probe zunächst aufgeschlossen. Dabei wird die Probe üblicherweise mit einem Überschuss an Schwefelsäure in einem offenen Kolben gekocht. Nach dem Aufschluss liegt der Stickstoff als Ammoniumsulfat in Schwefelsäure gelöst vor. Bei Zugabe einer starken Base wird die Schwefelsäure neutralisiert und Ammoniak ausgetrieben, der mittels Wasserdampfdestillation quantitativ in eine Säurevorlage eingeleitet werden kann. Das Destillat wird üblicherweise kondensiert und titriert, um aufgrund des verbrauchten Maßlösungsvolumens auf die Stickstoffmenge der Probe umzurechnen.

Die EP 0 693 685 A1 beschreibt eine vorbekannte Vorrichtung zur automatisierten Bestimmung des Stickstoff- und Proteingehaltes insbesondere in Lebensmitteln. Die vorbekannte Vorrichtung hat mehrere Reagenzgläser, die in einer Halterung vorgesehen sind. Die Halterung wird auf Schienenbahnen abgestützt, um die Reagenzgläser von einer ersten Station zum Aufschließen, einer zweiten Station zum Kühlen, daraufhin einer Destillation und schließlich einer Titration zuzuführen.

Die vorbekannte Vorrichtung ist relativ aufwendig. Sie benötigt einen erheblichen Platz. Nachteilig ist auch die unzureichende Absaugung von Dämpfen. Vor allem aber ist die relativ großvolumige Ausgestaltung zu bemängeln bei einer verhältnismäßig geringen Kapazität für Reagenzgläser.

Die vorliegende Erfindung will eine verbesserte Vorrichtung und ein Analyseverfahren der eingangsgenannten Art angeben.

Zur Lösung des verfahrensmäßigen Aspekts schlägt die vorliegende Erfindung ein Verfahren mit den Merkmalen von Anspruch 1 vor. Bei diesem Verfahren wird ein einzelnes Reagenzglas aus einem mehrere Reagenzgläser aufweisenden Beschickungsbereich gegriffen und zur chemischen Analyse bei im Wesentlichen vertikaler Ausrichtung des ausgewählten Reagenzglases dichtend gegen einen Stutzen angelegt. Dieser Stutzen dient üblicherweise der Wasserdampfdestillation und hat einen regelmäßig von dem Stutzen abragenden Schlauch bzw. ein Rohr zum Einleiten von Wasser und/oder Wasserdampf. Bei dem erfindungsgemäßen Verfahren wird das ausgewählte Reagenzglas mit einem Greifelement aus dem Beschickungsbereich verbracht und bis unter den Stutzen geführt. Das eigentliche Ansetzen des Reagenzglases gegen die Stutzen, d.h. das dichtende Anlegen der oberen Öffnung des Reagenzglases gegen den Stutzen erfolgt durch ein Anpresselement. Bei dem erfindungsgemäßen Verfahren wirken dementsprechend zwei unterschiedliche Manipulatoren mit dem Reagenzglas zusammen, um ein Reagenzglas aus dem Beschickungsbereich auszuwählen und schließlich dichtend gegen den Stutzen anzusetzen.

Diese Verfahrensführung ermöglicht eine verhältnismäßig leichte Ausgestaltung des Greifelementes. Das Greifelement muss lediglich das Reagenzglas halten und bewegen können. So kann das Greifelement relativ zügig von dem Beschickungsbereich bis unter den Stutzen bewegt werden. Relativ geringe Massen sind zu bewegen, was die Vorrichtung insgesamt leicht und reaktionsschnell macht.

Das Anpresselement muss lediglich an vorbestimmter Stelle wirksam sein. Das Anpresselement kann beispielsweise gegen einen Boden des ausgewählten Reagenzglases angelegt werden, um das Reagenzglas gegen den Stutzen anzupressen. Da die Reagenzgläser üblicherweise mit genormter Länge ausgebildet sind, kann das Anpresselement nur über einen geringen Weg bewegbar ausgebildet sein, um die notwendige Wirkung zu entfalten.

So lässt die erfindungsgemäße Verfahrensführung einen kompakten Aufbau einer das Verfahren durchführenden Analysevorrichtung zu. Dabei können die zur Durchführung des oben erwähnten Verfahrens erforderlichen Komponenten insgesamt in einem Gehäuse vorgesehen und von einer Gehäuseabdeckung abgedeckt sein, sodass etwaige, im Rahmen der Analyse aus den Reagenzgläsern aufsteigende Dämpfe nicht notwendiger Weise unmittelbar an die Umgebung gelangen. Der Beschickungsbereich kann dabei Platz für ein Einsatzgestell haben, welches zunächst außerhalb des Gehäuses mit Reagenzgläsern bestückt und danach in das Gehäuse der zur Durchführung des Verfahrens geeigneten Vorrichtung eingesetzt wird. Das mit Reagenzgläsern bestückte Einsatzgestell wird dabei üblicherweise zunächst in ein Aufschlussgerät eingesetzt, in welchem die Proben der Reagenzgläser für die Analyse vorbereitet werden. Da die erfindungsgemäße Vorrichtung so vorbereitet ist, dass das Einsatzgestell insgesamt in die Vorrichtung eingesetzt werden kann, ist der Vorteil gegeben, dass die Proben zunächst in dem Einsatzgestell aufgeschlossen werden können und das Einsatzgestell nach dem Abkühlen ohne weitere Handhabung der Reagenzgläser in die erfindungsgemäße Vorrichtung zur Probenanalyse eingesetzt werden kann. Innerhalb der erfindungsgemäßen Vorrichtung können hintereinander verschiedene Reagenzgläser ausgewählt und der Analyse zugeführt werden.

Mit Blick auf den Umstand, dass üblicherweise bei einer solchen sequentiellen Analyse ein früheres Reagenzglas von dem Stutzen zunächst entfernt werden muss, bevor das nachfolgende ausgewählte Reagenzglas an dem Stutzen angesetzt werden kann, schlägt die vorliegende Erfindung mit ihrer Weiterbildung vor, das ausgewählte Reagenzglas zwischen dem Beschickungsbereich und dem Stutzen in einen Parkbereich zu verbringen. In diesem Parkbereich wird das ausgewählte Reagenzglas zwischengelagert, während das Greifelement ein an dem Stutzen befindliches Reagenzglas, welches das frühere Reagenzglas im obigen Sinne ist, greift und von dem Stutzen entfernt. Das entfernte Reagenzglas wird dabei üblicherweise auch in dem Parkbereich geparkt, d.h. in einen Bereich zwischen dem Beschickungsbereich und dem Stutzen. Durch diese Verfahrensführung können die Rüstzeiten verringert werden. Das zu entfernende Reagenzglas wird ferner nicht zunächst gegriffen und unittelbar zurück in den Beschickungsbereich verbracht, um dort ein ausgewähltes Reagenzglas zu greifen und an dem Stutzen anzusetzen. Vielmehr ist lediglich ein kurzer Weg zwischen dem Stutzen und dem Parkbereich und damit eine kurze Anrüstzeit gegeben. Dabei befindet sich der Parkbereich üblicherweise bodennah zu dem Gehäuse der das Verfahren durchführenden Vorrichtung, um nicht nur in der Horizontalen zwischen dem Beschickungsbereich und dem Stutzen einen relativ kurzen Weg zurückzulegen, sondern auch das in der Vertikalen nach unten entfernte frühere Reagenzglas nach dieser Abziehbewegung nahe dem Parkbereich angeordnet zu haben, und somit die Reagenzgläser auch mit geringem vertikalen Weg zwischen dem Parkbereich und dem Stutzen zu bewegen. Entsprechendes gilt für das ausgewählte und an dem Stutzen anzusetzende Reagenzglas. Dabei befindet sich der Parkbereich üblicherweise nicht unmittelbar unterhalb des Stutzens, sondern leicht versetzt relativ zu dem Stutzen, beispielsweise um eine Entfernung, die dem ein- bis fünffachen Durchmesser des Reagenzglases entspricht, sodass unmittelbar unter dem Stutzen Raum für das Zuführen des ausgewählten Reagenzglases bzw. das Abziehen des frühen Reagenzglases bleibt, und zwar auch dann, wenn der Stutzen von einem Dampfeinleitungsschlauch bzw. -rohr in der Vertikalen nach unten überragt ist.

So wird gemäß einer bevorzugten Weiterbildung das ausgewählte Reagenzglas aufgrund dieser Ausgestaltung auch vorzugsweise durch das Greifelement zunächst aus dem Beschickungsbereich vertikal angehoben, dann durch eine horizontale Bewegung seitlich neben den Beschickungsbereich bewegt und schließlich in dem Parkbereich abgesetzt. Als Absetzen im Sinne der vorliegenden Erfindung ist dabei insbesondere eine vertikale Abwärtsbewegung zu verstehen. Der Parkbereich hat dabei regelmäßig eine Parkaufnahme zur Aufnahme von mindestens zwei Reagenzgläsern.

Mit dem zuvor erwähnten Abstand der Parkaufnahme von dem Bereich unmittelbar unterhalb des Stutzens ergibt sich eine bevorzugte Verfahrensführung für das von dem Stutzen entfernte Reagenzglas, bei dem dieses von dem Stutzen zunächst in der Vertikalen nach unten abgezogen wird, d.h. im Schwerefeld der Erde abwärts bewegt, und von dort seitlich neben den Stutzen horizontal bewegt wird, um danach erneut angehoben und über die Parkaufnahme verbracht und nach horizontaler Bewegung in dem Parkbereich abgesetzt wird. Das Absetzen erfolgt üblicherweise in eine Ausnehmung der Parkaufnahme.

Der der Erfindung zugrundeliegenden vorrichtungsmäßigen Problemstellung wird mit der vorliegenden Erfindung eine Vorrichtung mit den Merkmalen von Anspruch 7 vorgeschlagen. Die Vorrichtung hat ein Gehäuse, das einen Beschickungsbereich zur Aufnahme mehrerer Reagenzgläser und eine Probennahmeeinheit mit einem Stutzen zur dichtenden Anlage an ein Reagenzglas aufnimmt. Dieses Reagenzglas ist ein ausgewähltes Reagenzglas im Sinne der verfahrensmäßigen Lösung, welches aus dem Beschickungsbereich entnommen worden ist. Der Stutzen ist Teil einer Probennahmeeinheit, die wiederum Bestandteil einer Analyseeinrichtung ist. Die Analyseeinrichtung kann beispielsweise einen Kühler, beispielsweise einen Schlangenkühler, umfassen, um durch den Stutzen aus dem Reagenzglas abgeführten Dampf zu kondensieren und in flüssiger Form einer weiteren Analyse zuzuführen, beispielsweise durch Titration, wie dies bei der Stickstoffbestimmung nach Kjeldahl üblich ist.

Die erfindungsgemäße Vorrichtung hat ein Greifelement, welches von dem Beschickungsbereich zu dem Stutzen beweglich ist, um das ausgewählte Reagenzglas zumindest unterhalb des Stutzens anzuordnen. Die erfindungsgemäße Vorrichtung umfasst ferner ein das Reagenzglas in seiner Längsrichtung gegen den Stutzen andrückendes Anpresselement. Die oben erwähnten Bauteile sind vorzugsweise insgesamt in dem Gehäuse angeordnet, bevorzugt von einer transparenten Gehäuseabdeckung abgedeckt. Diese Haube ist üblicherweise beweglich, insbesondere verschwenkbar an dem Gehäuse verbunden.

Bevorzugte Weiterbildungen der erfindungsgemäßen Vorrichtung sind in den Ansprüchen 8 bis 15 angegeben.

Dabei definiert Anspruch 12 eine Weiterbildung des Greifelementes, die für sich erfindungswesentlich sein kann. Das Greifelement hat zwei ein Reagenzglas greifende Greifarme. Diese Greifarme sind zum Greifen des Reagenzglases mit einem Antrieb antreibbar. Der Antrieb ist üblicherweise ein elektrischer Antrieb und über ein Getriebe mit den Greifarmen gekoppelt. Das Getriebe nach dieser bevorzugten Weiterbildung der erfindungsgemäßen Vorrichtung hat eine in Greifrichtung wirksame Rutschkupplung. So führt das Zustellen der Greifarme zum Greifen eines Reagenzglases zunächst dazu, dass sich die Greifarme üblicherweise umfänglich gegen den Außenumfang des Reagenzglases legen. Reagenzgläser unterliegen aber gewissen Toleranzschwankungen, sodass der Außendurchmesser des Reagenzglases nicht exakt vorbestimmt ist. Mitunter kann es auch zu einer ungenauen Positionierung des Greifelementes kommen, sodass das auszuwählende Reagenzglas nicht exakt zentrisch zu der üblicherweise synchronen Zustellbewegung der Greifarme vorgesehen ist. Die Rutschkupplung trägt dementsprechend dafür Sorge, dass sich die Greifarme schonend an das Reagenzglas anlegen. Die Greifarme können mit einem weichen Überzug versehen sein, um das Reagenzglas relativ rutschfest zu halten. Die Greifarme sind üblicherweise aus Aluminium gefertigt. Sie können ganz oder teilweise mit einem elastomeren Überzug versehen sein, um beispielsweise die metallischen Greifarme vor aggressiven chemischen Medien und damit Korrosion zu schützen und/oder den Umgriff eines Reagenzglases zu verbessern. Die Greifarme können mit ihrer metallischen Oberfläche oder aber mit einer mit dem elastomeren Überzug versehenen Oberfläche mit dem Reagenzglas zusammenwirken. Die Greifarme werden dabei üblicherweise knapp unterhalb des oberen Randes des Reagenzglases gehalten, welcher verdickt ist, sodass hierdurch ein Anschlag für Greifarme gebildet wird, die den Außenumfang des Reagenzglases mit wenig Spiel, ggf. reibschlüssig halten können. Die Greifarme haben dabei jeweils für sich eine c-förmige Ausgestaltung, sodass das ausgewählte Reagenzglas nahezu vollumfänglich von den Greifarmen umgriffen ist.

Das Getriebe lässt indes in einer der Greifrichtung umgedrehten Bewegung im Wesentlichen kein Durchrutschen des Antriebsmomentes zu. So ist die Rutschkupplung lediglich einseitig wirksam ausgebildet, um beim Zustellen wirksam zu sein, wohingegen beim Aufmachen des Umgriffs eine direkte Verbindung zwischen dem Antrieb und den Greifarmen möglich ist. Eventuelle Klemmeffekte zwischen den Greifarmen und dem Reagenzglas werden dementsprechend sicher beim Anschalten des Antriebes zum Öffnen der Greifarme überwunden, sodass das Reagenzglas sicher von den Greifarmen entfernt und freigegeben wird.

Das Getriebe dieser Weiterbildung ist jede Vorrichtung, die eine Drehbewegung des Antriebs in eine Bewegung der beiden Greifarme umsetzt, die das Greifen bzw. Loslassen des Reagenzglases bewirkt. Diese Bewegung der Greifarme kann dabei eine translatorische Bewegung und/oder eine Schwenkbewegung sein. Das entsprechende Getriebe befindet sich üblicherweise zwischen den Greifarmen und der Rutschkupplung und umfasst bevorzugt ein selbsthemmendes Schneckengetriebe, sodass die Greifarme auch dann geschlossen bleiben, wenn nach Umschließen des Reagenzglases durch Zufahren der Greifarme der Antrieb ausgeschaltet wird.

Mit Blick auf eine möglichst einfache konstruktive Ausgestaltung hat die Rutschkupplung Kupplungsscheiben mit gezahnten und kooperierenden Kupplungsflächen. Die Kupplungsflächen sind bei Drehung in Greifrichtung reibschlüssig miteinander verbunden und bei einer Drehung des Antriebes in entgegengesetzte Richtung formschlüssig miteinander verbunden. Durch den Formschluss wird eine unmittelbare Wechselwirkung zwischen den Greifarmen und dem Antrieb bewirkt, während aufgrund der reibschlüssigen Ausgestaltung das Durchrutschen erlaubt wird. Die entsprechende Ausgestaltung der Kupplungsflächen wird insbesondere dadurch verwirklicht, dass die einander gegenüberliegenden und miteinander kooperierenden Kupplungsflächen gezahnt ausgebildet sind. Eine sich im Wesentlichen koaxial zu der Drehachse des Antriebs erstreckende Zahnflanke bewirkt dabei eine formschlüssige Verbindung, wohingegen eine deutlich schräg hierzu ausgebildete Flanke ein Durchrutschen erlaubt. Dabei sind die beiden Kupplungsscheiben üblicherweise durch eine Feder gegeneinander angelegt. Durch die Federkraft kann dasjenige Drehmoment eingestellt werden, bei dem die beiden Kupplungsscheiben aneinander vorbeigleiten.

Mit Blick auf denkbare Fehlsteuerungen wird gemäß einer bevorzugten Weiterbildung der vorliegenden Erfindung ein Signalgeber vorgeschlagen, der ein übermäßiges Zufahren der Greifarme erkennbar macht. Der Signalgeber kann dabei ein mechanisch mit zumindest einem der Greifarme gekoppelter Hebel sein, der an seinem freien Ende ein Auslöseelement trägt, welches mit einem beispielsweise an einer Platine zur Steuerung des Antriebes vorgesehenen Sensor zusammenwirkt. Damit kann erkannt werden, dass die Greifarme zwar zufahren, jedoch kein Reagenzglas zwischen sich aufnehmen und somit über das übliche Maß hinaus zufahren. Um eine Beschädigung zu vermeiden, stoppt der Signalgeber über das zugeordnete Sensorelement den Antrieb.

Weitere Einzelheiten und Vorteile der vorliegenden Erfindung entnehmen Sie der nachfolgenden Beschreibung eines Ausführungsbeispiels in Verbindung mit der Zeichnung. In dieser zeigen:
- Figur 1: eine perspektivische Seitenansicht des Ausführungsbeispiels einer erfindungsgemäßen Vorrichtung, bei welcher das auszuwählende Reagenzglas sich in den Beschickungsbereich und ein vorheriges Reagenzglas sich an dem Stutzen befindet;
- Figur 2: das in Figur 1 gezeigte Ausführungsbeispiel, bei dem das auszuwählende Reagenzglas sich auf dem Weg zu einer Parkposition befindet;
- Figur 3: eine Ansicht nach den Figuren 1 und 2, wobei das ausgewählte Reagenzglas in dem Parkbereich abgesetzt ist;
- Figur 4: eine Ansicht nach den Figuren 1 bis 3, wobei sich der Greifarm in einer Zwischenposition zwischen der Parkposition und dem Stutzen befindet;
- Figur 5: eine Darstellung nach den Figuren 1 bis 4, wobei der Greifarm sich um das frühere Reagenzglas gelegt hat;
- Figur 6: eine vergrößerte Darstellung des Stutzens beim Abnehmen des früheren Reagenzglases von dem Stutzen;
- Figur 7: eine vergrößerte Darstellung des Stutzens nach dem Abnehmen des früheren Reagenzglases;
- Figur 8: die Darstellung nach den Figuren 1 bis 5 mit dem früheren Reagenzglas nahe der Parkposition;
- Figur 9: das Ausführungsbeispiel nach dem Verbringen des früheren Reagenzglases in die Parkposition;
- Figur 10: das Ausführungsbeispiel nach dem Verbringen des ausgewählten Reagenzglases unter dem Stutzen;
- Figur 11: eine vergrößerte Darstellung gemäß Figur 6, die das Andrücken des ausgewählten Reagenzglases gegen den Stutzen verdeutlicht, und
- Figur 12: eine perspektivische, teilweise transparente Darstellung des Greifelementes des gezeigten Ausführungsbeispiels.

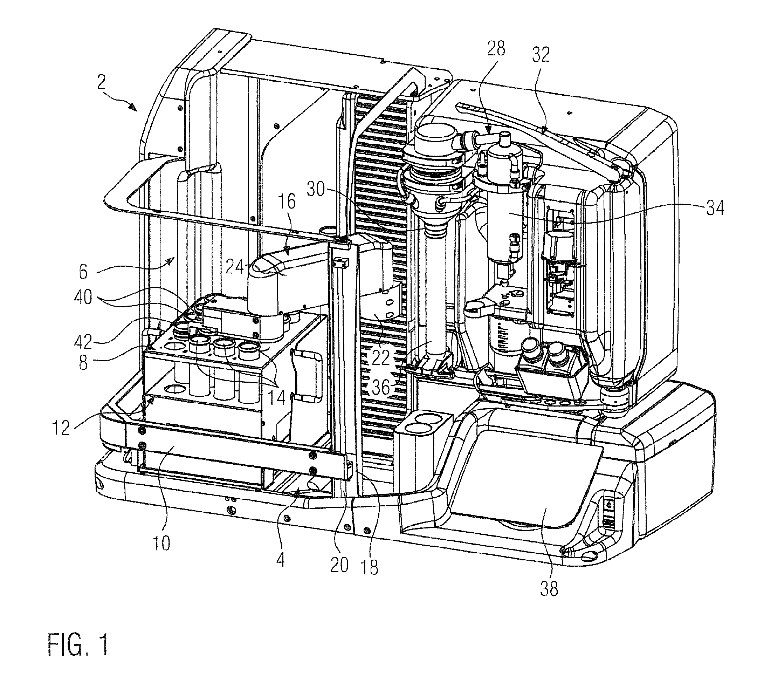

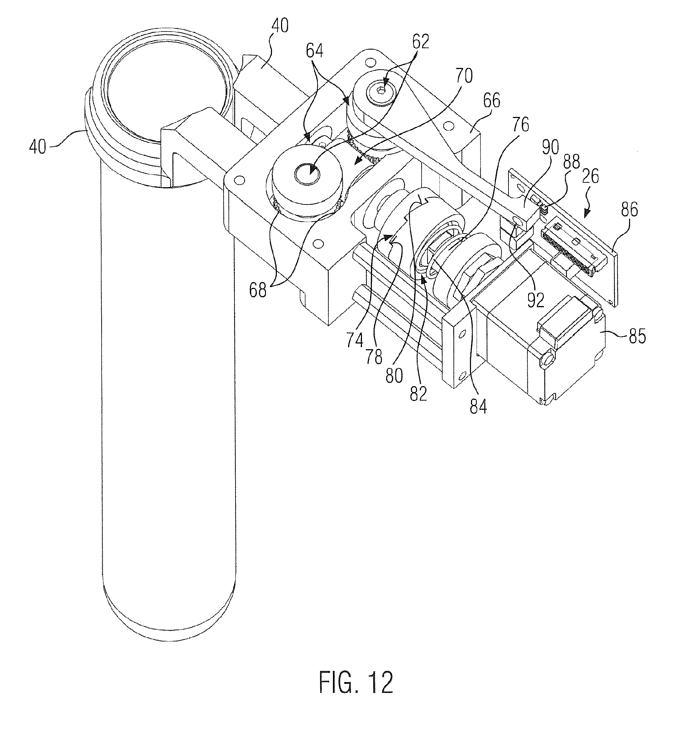

Die Figur 1 zeigt eine perspektivische Seitenansicht des Ausführungsbeispiels einer Vorrichtung zur Stickstoffanalyse nach Kjeldahl mit einem mit Bezugszeichen 2 gekennzeichneten Gehäuse, welches einen Gehäuseboden 4 und eine Gehäuserückwand 6 aufweist. Mit Bezugszeichen 8 ist ein Beschickungsbereich gekennzeichnet, der sich in Figur 1 links und nahe dem Gehäuseboden 4 befindet. Mit Bezugszeichen 10 ist ein beweglicher Haltearm einer nicht näher gezeigten Abdeckung gekennzeichnet, die zur Erreichbarkeit des Beschickungsbereiches 8 von außen angehoben werden kann. In dem Beschickungsbereich 8 befindet sich ein Einsatzgestell 12 mit einer Vielzahl von Reagenzgläsern 14. Bezugszeichen 16 kennzeichnet ein Greifelement, das sich in etwa auf Höhe einer Säule 18 befindet, die eine Schiebeführung 20 für den Haltearm 10 aufweist und dementsprechend die Abdeckung hält und führt. Im Wesentlichen hinter der Säule 18 ist ein translatorische höhenbewegliches Auflager 22 des Greifelementes 16 vorgesehen. Das Greifelement 16 hat einen ersten Arm 24, der um eine sich in der Vertikalen erstreckenden Achse auf dem Auflager 22 verschwenkbar gelagert ist, und einen zweiten Arm 26, der relativ zu dem ersten Arm 24 um eine nämliche Achse schwenkbar gelagert und an dem freien Ende des ersten Armes 24 vorgesehen ist. Der zweite Arm 26 trägt die in Figur 12 dargestellten Details des Greifelementes 16, die nachfolgend noch näher beschrieben werden.

Auf der dem Beschickungsbereich 8 gegenüberliegenden Seite der Säule 18 und des Auflagers 22 ist eine Probennahmeeinheit 28 mit einem Stutzen 30 vorgesehen, die mit einer generell mit Bezugszeichen 32 gekennzeichneten Analyseeinrichtung mit einem Schlangenkühler 34 verbunden ist. Der Stutzen 30 ist mit einem Kanal zum Einleiten von Wasser und/oder Wasserdampf verbunden und hat einen Auslass zum Abführen von Gasen, die aus dem mit Bezugszeichen 36 gekennzeichneten früheren Reagenzglas während der Wasserdampferzeugung aufsteigen. Bezüglich dieser Details entspricht die Ausführungsform früheren Ausführungsformen der vorliegenden Anmelderin, die unter dem Markennamen VAPODEST gegenwärtig vertrieben werden. Die in Figur 1 gezeigte Ausführungsform hat ferner ein Display 38 für die Steuerung und ggf. das Ablesen von Messwerten, die infolge der Titration einer analysierten Probe ermittelt werden.

Die Figur 1 zeigt den Greifer 16 mit seinen mit Bezugszeichen 40 gekennzeichneten Greifelementen in einer Position, in welcher die Greifelemente 40 ein ausgewähltes Reagenzglas 42 umfänglich greifen, das mit seinem vorderen freien Ende das Beschickungsgestell 12 geringfügig überragt (vgl. Figur 12). Das Greifelement ist durch die beiden Arme 24, 26 so ausgebildet, das sämtliche, in dem Beschickungsgestell 12 gehaltene Reagenzgläser von dem Greifelement 16 jeweils gegriffen werden können.

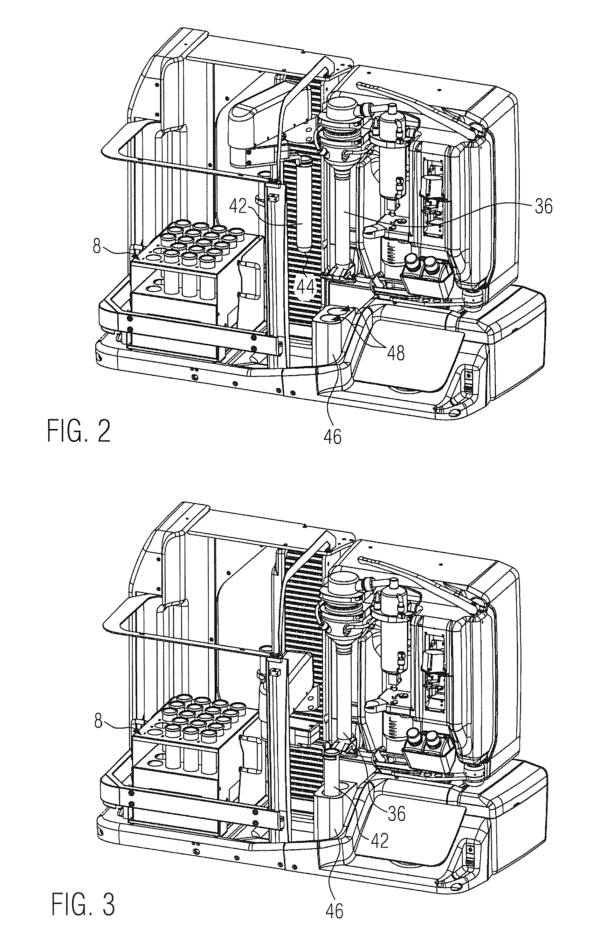

Unter Bezugnahme auf die weiteren Figuren wird im Folgenden erläutert, wie das ausgewählte Reagenzglas 42 von dem Beschickungsbereich 8 an den Stutzen 30 angesetzt wird. Nach dem Zufahren der Greifarme 40 ist das ausgewählte Reagenzglas 42 in Figur 2 durch das Greifelement 16 gegriffen und geklemmt. Das Greifen erfolgt dabei unmittelbar unterhalb eines verdickten oberen Randes des Reagenzglases, sodass das Reagenzglas nicht nach unten durch die Greifarme 40 hindurch rutschen kann. Durch translatorische Bewegung des Auflagers 22 in der Vertikalen wird das ausgewählte Reagenzglas 42 nunmehr aus dem Beschickungsbereich 8 gehoben und entfernt. Nachdem ein Boden 44 des Reagenzglases 42 über das Beschickungsgestell 12 hinausgehoben worden ist, werden die Arme 24, 26 verschwenkt, um das ausgewählte Reagenzglas zunächst in der Horizontalen zu einer Parkposition zu verbringen, die mit einer Parkhalterung 46 versehen ist. Die Parkhalterung 46 bildet zwei Aufnahmen 48 für zwei Reagenzgläser. Die Figur 2 verdeutlicht eine Zwischenposition des ausgewählten Reagenzglases 42 in der herausgehobenen Stellung vor Einbringen in die Aufnahme 48. Das ausgewählte Reagenzglas 42 wird sonach senkrecht über die zugeordnete Aufnahme 48 gebracht. Danach wird das Greifelement 16 abgesenkt, um das ausgewählte Reagenzglas in der Parkhalterung 46 abzusetzen (vgl. Figur 3).

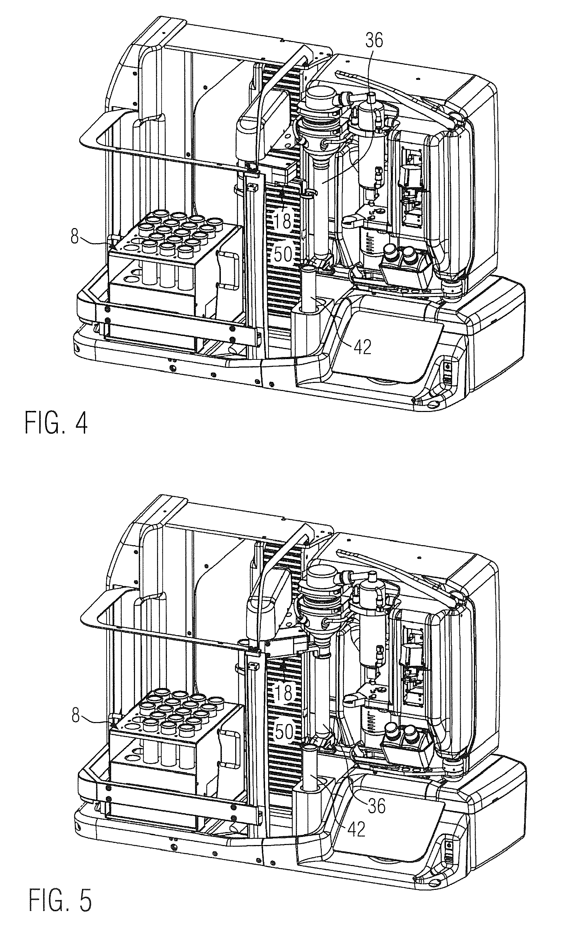

Danach werden die Greifarme 40 gelöst, um das Greifelement 16 von dem ausgewählten Reagenzglas 42 zu entfernen, wie dies in Figur 4 verdeutlicht ist. Während das frühere Reagenzglas 36 im Rahmen der Analyse fertig bearbeitet wird, fährt das Greifelement 16 zu dem Stutzen 30 und seitlich an das Reagenzglas 36 heran. Auch dieses Reagenzglas 36 wird leicht unterhalb des oberen Randes gegriffen (vgl. Figur 5). Dieser obere, kragenförmige Rand dient der Abdichtung des Reagenzglases gegen eine kugelabschnittförmige Dichtung an dem Stutzen 30. Diese dichtende Anlage wird aufrecht erhalten durch ein mit Bezugszeichen 50 gekennzeichnetes Anpresselement, welches gegen den Boden 44 des jeweiligen Reagenzglases 36 anliegt und dieses Reagenzglas 36 in der Vertikalen nach oben und gegen den Stutzen 30 anpresst, wie dies in Figur 5 verdeutlicht ist.

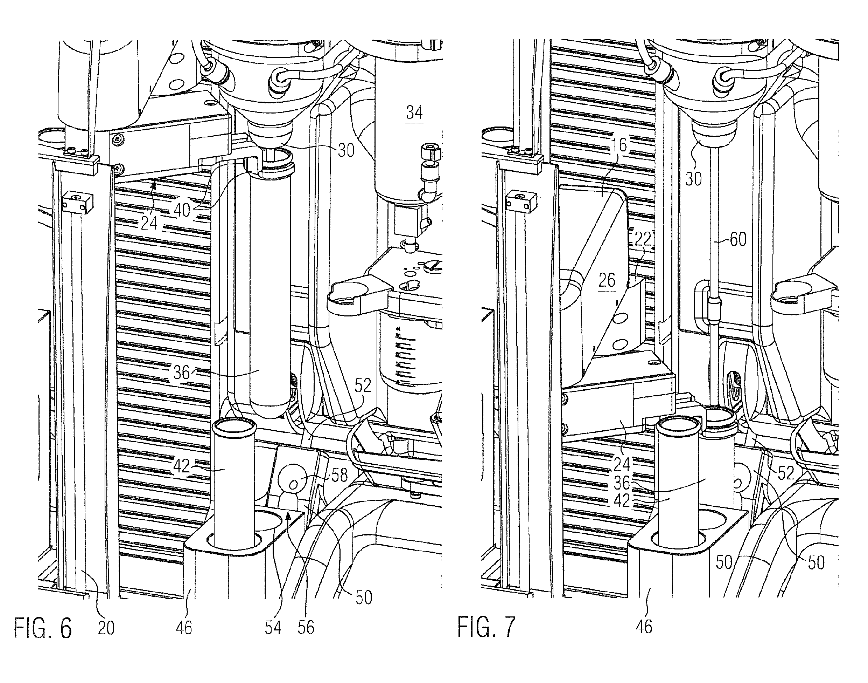

Nachdem das Greifelement 16 das frühere Reagenzglas 36 gegriffen hat, wird das Anpresselement 50 gelöst. Wie die Figuren 6 und 7 verdeutlichen, ist das Anpresselement 50 verschwenkbar an einem Verschwenkarm 52 und antreibbar vorgesehen. Durch die Schwenkbewegung wird das Anpresselement 50 nicht nur von dem Boden 44 entfernt. Das Anpresselement 50 wird auch aus einem Bereich unterhalb des früheren Reagenzglases 36 weg bewegt.

Die Figuren 6 und 7 lassen erkennen, dass das Anpresselement als keilförmiges Element vorgesehen ist und an seinem vorderen Ende eine Schräge 54 hat, die mit einer konkaven Mulde 56 versehen ist und in eine Kalotte 48 übergeht, die zur formschlüssigen Aufnahme des sphärischen Endes des Bodens 44 an das Reagenzglas 36 angepasst ausgebildet ist.

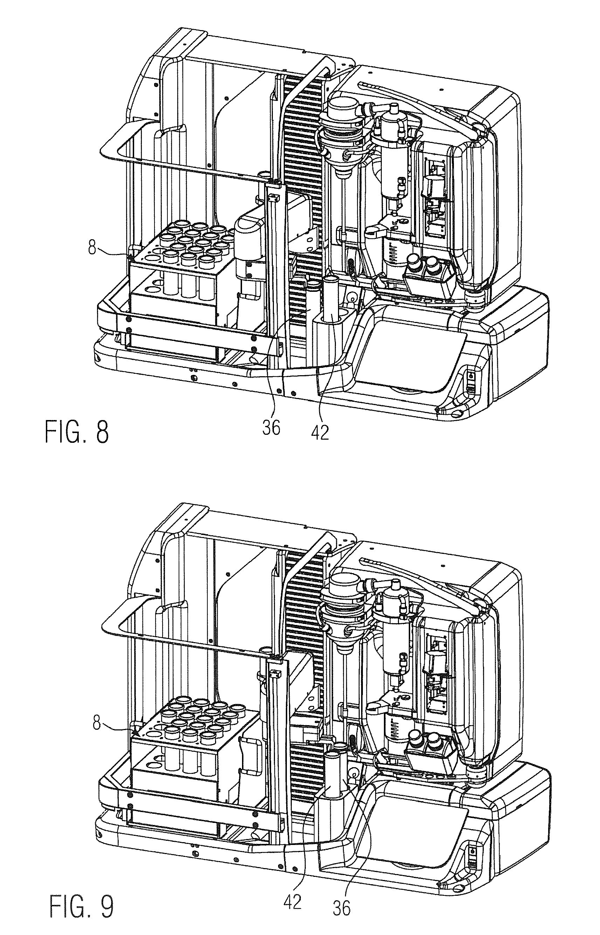

Wie die Figuren 6 und 7 verdeutlichen, befinden sich die Greifarme 40 zunächst leicht unterhalb des oberen kragenfömigen Randes des Reagenzglases 36. So rutscht üblicherweise das frühere Reagenzglas 36 nach dem Lösen des Anpresselementes 50 in der Vertikalen nach unten, bis der verdickte Kragen des Reagenzglases an den nunmehr zugefahrenen Greifarmen 44 anliegt ebenso wie beim Hochschieben des Reagenzglases durch das Anpresselement können auch beim Absenken des Reagenzglases 36 die Greifarme zunächst leicht geöffnet werden, so dass das Reagenzglas bis zu dem verdickten Kragen durchrutschen kann. Das Greifelement 16 fährt nunmehr nach unten, um das frühere Reagenzglas 36 mit seiner Öffnung unter das untere Ende eines mit Bezugszeichen 60 gekennzeichneten Dampfeinleitungsschlauches zu bringen, mit dem Wasserdampf in das zur Analyse vorgesehene Reagenzglas 36 eingebracht wird (vgl. Figur 7). Das frühere Reagenzglas 36 wird nunmehr nahe des Gehäusebodens 4 bewegt und seitlich zu der anderen Aufnahme 48 verbracht (Figur 8). Danach wird das Greifelement 16 translatorisch und vertikal angehoben, erneut verschwenkt, sodass das frühere Reagenzglas 36 zunächst exakt oberhalb der Aufnahme 48 angeordnet und danach durch Absenken des Greifelementes 16 in diese Aufnahme 48 eingesetzt wird (Figur 9).

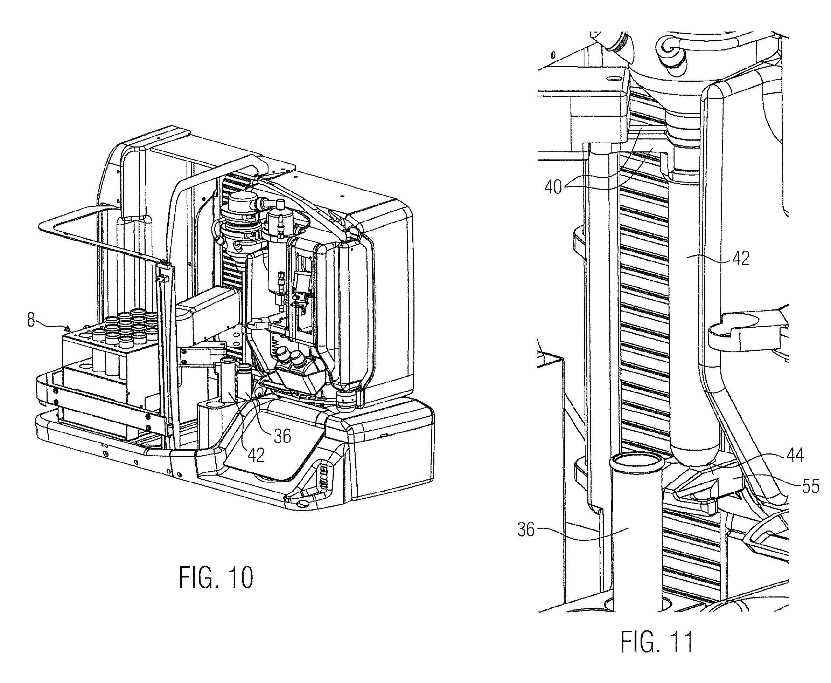

Nunmehr löst sich das Greifelement 16 von dem früheren Reagenzglas. Die Greifarme werden danach um das ausgewählte Reagenzglas 42 unmittelbar benachbart zu dem früheren Reagenzglas 36 verbracht und um dieses gelegt. Das ausgewählte Reagenzglas 42 wird zunächst aus der Parkhalterung 46 herausgehoben, unmittelbar benachbart zu dieser in einer Position angeordnet, die in etwa der Position des Reagenzglases 36 in Figur 8 entspricht. Danach wird das Reagenzglas 42 horizontal verfahren und unter den Dampfeinleitungsschlauch 60 geführt, um danach in einer vertikalen Hebebewegung bis an den Stutzen 30 angelegt zu werden. Diese vorläufige Position ist in Figur 11 dargestellt.

Nunmehr verschwenkt das Anpresselement 50 von unten gegen den Boden 44 des ausgewählten Reagenzglases 42 und presst dieses gegen den Stutzen 30. Das Anpresselement 50 fährt so weit hoch, bis das ausgewählte Reagenzglas 42 mit seinem Band gegen die durch den Stutzen 30 gebildete Dichtung gedrückt wird. Dabei verharrt das Greifelement 16 in seiner Position. Die Greifarme 40 werden aber gesteuert leicht geöffnet, sodass das ausgewählte Reagenzglas 42 nach oben durch die Greifarme 40 hindurch rutschen kann und durch die Greifarme geführt werden. Bei diesem Anlegen des ausgewählten Reagenzglases 42 gegen den Stutzen 30 bringt nur das Anpresselement 50 die erforderliche senkrecht wirkende Kraft zum dichtenden Anlegen des ausgewählten Reagenzglases 42 gegen den Stutzen 30 auf. So muss keine Anpresskraft durch das relativ filigrane Greifelement 16 ausgebracht werden, sodass dieses leicht und schnell beweglich ausgelegt werden kann.

Nach dem Lösen der Greifarme 40 von dem ausgewählten Reagenzglas 42 fährt das Greifelement 16 zu der Parkposition und greift das dort zwischengeparkte frühere Reagenzglas 36. Es wird ähnlich zu der zuvor für das ausgewählte Reagenzglas 42 beschriebenen Weise aus der Aufnahme 48 herausgehoben, über den Beschickungsbereich 8 gebracht und in eine diesem Reagenzglas 36 zugeordnete Ausnehmung des Beschickungsbereiches 6 abgesetzt.

Die Figur 12 zeigt Details des zweiten Armes 26 mit den Greifarmen 40, die verdrehfest an Lagerbolzen 62 befestigt sind, die in Aufnahmen 64, an einer Basis 66 verschwenkbar gelagert sind. Jeder der Lagerbolzen 62 trägt jeweils ein Zahnrad 68 eines Schneckengetriebes 70, dessen Schnecke verdrehfest mit einer ersten Kupplungsscheibe 74 verbunden ist. Diese hat eine Verzahnung mit sich axial zu einer Antriebswelle 76 erstreckenden ersten Zahnflanken 78 und sich leicht schräg erstreckenden zweiten Zahnflanken 80. Komplementär zu dieser Verzahnung 78, 80 ist eine zweite Kupplungsscheibe 82 ausgebildet, die unter der Vorspannung einer Feder 84 gegen die erste Kupplungsscheibe 74 anliegt. Die Antriebswelle 76 ist mit einem elektrischen Motor 85 verbunden.

Benachbart zu dem Motor 85 ist eine Leiterplatte 86 dargestellt, die mit Bauelementen bestückt ist, um die notwendige Steuerung des Motors 85 vorzunehmen. Des Weiteren trägt die Leiterplatte 86 einen Hall-Sensor, der gegenüberliegend zu dem freien Ende eines Hebels 90 vorgesehen ist, der als Signalgeber dient und verdrehfest mit einem der Lagerbolzen 62 verbunden ist, um ein übermäßiges Zufahren der Greifarme 40 anzuzeigen. Das freie Ende des Hebels 90 weist eine Bohrung auf, in die ein mit dem Hall-Sensor zusammenwirkende Magnet 92 eingepresst ist.

Zum Zufahren der Greifarme 40 wird die Antriebswelle des Motors 85 gemäß Figur 12 im Uhrzeigersinn betrieben. Sobald sich die Greifarme 40 um das Reagenzglas 42 gelegt haben und keine weitere Bewegung der Greifarme 44 möglich ist, ohne das Reagenzglas ggf. zu zerstören, rutscht die durch die beiden Kupplungsschreiben 74, 82 im Wesentlichen gebildete Rutschkupplung durch. Der Antrieb des Motors 85 führt zu keiner weiteren Zufahrbewegung der Greifarme 40. Wird indes dem Motor 85 der Befehl gegeben, den Griff um das Reagenzglas 42 zu lösen, bleibt es durch das Zusammenwirken der ersten Zahnflanken 78 bei einer verdrehfesten Verbindung zwischen den beiden Kupplungsscheiben 74, 82 und damit zwischen den Greifarmen 40 und der Antriebswelle 76 des Motors 84. So werden die Greifarme 44 schlupffrei geöffnet.

Das durch die Zahnräder 68 und die Schnecke gebildete Schneckengetriebe 70 ist selbsthemmend ausgebildet. Wird danach der Motor 85 angehalten, während die Greifarme 40 das Reagenzglas 42 umgreifen, bleibt dieser Griff erhalten, so dass der Umgriff des Reagenzglases 42 auch nicht beispielsweise durch äußere Kräfte gelöst werden kann.

Wird indes der Motor 85 angetrieben, ohne dass sich ein Reagenzglas in angemessener Position zwischen den Greifarmen 40 befindet, so schlägt ein mit einem nicht gezeigten Magneten, der ein Auslöseelement ausbildet, versehenes freies Ende des Hebels 90 gegen den Hall-Sensor 88 und indiziert die Fehlfunktion. Die auf der Leiterplatte 86 vorgesehene Schaltung bewirkt danach ein Stoppen des Motors 85.

### Bezugszeichenliste

- 2: Gehäuse
- 4: Gehäuseboden
- 6: Gehäuserückwand
- 8: Beschickungsbereich
- 10: Haltearm
- 12: Beschickungsgestell
- 14: Reagenzglas
- 16: Greifelement
- 18: Säule
- 20: Schiebeführung
- 22: Auflager
- 24: erster Arm
- 26: zweiter Arm
- 28: Probennahmeeinheit
- 30: Stutzen
- 32: Analyseeinrichtung
- 34: Schlangenkühler
- 36: früheres Reagenzglas
- 38: Display
- 40: Greifarm
- 42: ausgewähltes Reagenzglas
- 44: Reagenzglasboden
- 46: Parkhalterung
- 48: Aufnahme
- 50: Anpresselement
- 52: Schwenkarm
- 54: Schräge
- 55: Motor
- 56: konkave Fläche
- 58: Kalotte
- 60: Dampfleitungsschlauch
- 62: Exzenter
- 64: Gelenk
- 66: Basis
- 68: Zahnrad
- 70: Schneckengetriebe
- 74: erste Kupplungsscheibe
- 76: Antriebswelle
- 78: erste Zahnflanke
- 80: zweite Zahnflanke
- 82: zweite Kupplungsscheibe
- 84: Feder
- 85: Motor
- 86: Leiterplatte
- 88: Hall-Sensor
- 90: Hebel
- 92: Magnet

## Patentansprüche

1. Verfahren für die Analyse von in einem Reagenzglas (42) enthaltenen Inhaltsstoffen, bei dem aus einem mehrere Reagenzgläser (14) aufweisenden Beschickungsbereich (8) ein Reagenzglas (42) ausgewählt, gegriffen und zur chemischen Analyse bei im wesentlichen vertikaler Ausrichtung des ausgewählten Reagenzglases (42) dichtend gegen einen Stutzen (30) angelegt wird, wobei das ausgewählte Reagenzglas (42) mit einem Greifelement (16) aus dem Beschickungsbereich (8) verbracht und bis unter den Stutzen (30) geführt und danach von einem das Reagenzglas (42) in seiner Längsrichtung gegen den Stutzen (30) drückenden Anpresselement (50) dichtend an den Stutzen (30) angesetzt wird.

2. Verfahren nach Anspruch 1, **dadurch gekennzeichnet, dass** das Anpresselement (50) gegen einen Boden (44) des ausgewählten Reagenzglases (42) verschwenkt und daran angelegt wird.

3. Verfahren nach Anspruch 1 oder 2, **dadurch gekennzeichnet, dass** das ausgewählte Reagenzglas (42) zwischen dem Beschickungsbereich (8) und dem Stutzen (30) in einen Parkbereich verbracht und dort zwischengelagert wird, während das Greifelement (16) ein an dem Stutzen (30) befindliches Reagenzglas (36) greift und entfernt.

4. Verfahren nach Anspruch 3, **dadurch gekennzeichnet, dass** das von dem Stutzen (30) entfernte Reagenzglas (36) in den Parkbereich verbracht und benachbart zu dem ausgewählten Reagenzglas (42) zwischengeparkt wird und nach dem Ansetzen des ausgewählten Reagenzglas (42) in den Beschickungsbereich (8) verbracht wird.

5. Verfahren nach einem der vorherigen Ansprüche, **dadurch gekennzeichnet, dass** das ausgewählte Reagenzglas durch das Greifelement (16) aus dem Beschickungsbereich (8) zunächst vertikal angehoben, dann seitlich neben den Beschickungsbereich (8) horizontal bewegt und in dem Parkbereich abgesetzt wird.

6. Verfahren nach einem der vorherigen Ansprüche, **dadurch gekennzeichnet, dass** das von dem Stutzen (30) entfernte Reagenzglas (36) von dem Stutzen (30) in der Vertikalen nach unten abgezogen, von dort neben den Stutzen (30) bewegt, erneut angehoben und danach in dem Parkbereich abgesetzt wird.

7. Vorrichtung zur Durchführung des Verfahrens nach einem der Ansprüche 1 bis 6, mit einem Gehäuse (2), das einen Beschickungsbereich (8) zur Aufnahme mehrerer Reagenzgläser (14), eine mit einer Analyseeinrichtung (32) verbundene Probennahmeeinheit (28) mit einem Stutzen (30) zur dichtenden Anlage eines ausgewählten Reagenzglases (42), ein das ausgewählte Reagenzglas (42) greifendes Greifelement (16), das von dem Beschickungsbereich (8) zum dem Stutzen (30) beweglich ist, und einen das Reagenzglas (42) in seiner Längsrichtung gegen den Stutzen (30) drückendes Anpresselement (50) in sich aufnimmt.

8. Vorrichtung nach Anspruch 7, **dadurch gekennzeichnet, dass** das Anpresselement (50) gegen einen Boden (44) des ausgewählten Reagenzglases (42) verschwenkbar ist.

9. Vorrichtung nach Anspruch 7 oder 8, **gekennzeichnet durch** einen Parkbereich, der zwischen dem Beschickungsbereich (8) und dem Stutzen (30) ausgebildet und mit einer Parkhalterung (46) zur Aufnahme von zumindest zwei Reagenzgläsern (36, 42) versehen ist.

10. Vorrichtung nach Anspruch 9, **dadurch gekennzeichnet, dass** von dem Stutzen (30) ein in das Reagenzglas (36) einbringbarer Dampfleitungsschlauch (60) abragt und dass die Parkhalterung (46) bodennah vorgesehen ist.

11. Vorrichtung nach einem der Ansprüche 7 bis 10, **dadurch gekennzeichnet, dass** das Greifelement (16) innerhalb des Gehäuses (2) in vertikaler Richtung translatorisch verschieblich und in horizontaler Richtung durch Verschwenken von um zumindest zwei sich im Wesentlichen vertikal erstreckende Achsen verschwenkbaren Armen (24, 26) beweglich ist.

12. Vorrichtung zur Durchführung des Verfahrens nach einem der Ansprüche 1 bis 6, insbesondere in einer Vorrichtung nach den Ansprüchen 7 bis 11, mit zwei ein Reagenzglas (42) greifenden Greifarmen (40), die zum Greifen des Reagenzglases (42) mit einem Antrieb (85) antreibbar sind, welche über ein Getriebe (70, 74, 82) mit den Greifarmen (40) gekoppelt ist, wobei das Getriebe (70, 74, 82) eine in Greifrichtung wirksame Rutschkupplung (74, 82, 84) umfasst, die in einer zu der Greifrichtung umgedrehten Bewegung im Wesentlichen kein Durchrutschen des Antriebsmomentes zulässt.

13. Vorrichtung nach Anspruch 12, **dadurch gekennzeichnet, dass** das Getriebe ein selbsthemmendes Schneckengetriebe (70) umfasst.

14. Vorrichtung nach Anspruch 12 oder 13, **dadurch gekennzeichnet, dass** die Rutschkupplung Kupplungsscheiben (74, 82) mit gezahnten kooperierenden Kupplungsflächen (78, 80) umfasst, die bei Drehung in Greifrichtung reibschlüssig und in entgegengesetzter Richtung formschlüssig miteinander verbunden sind.

15. Vorrichtung nach einem der Ansprüche 12 bis 14, **gekennzeichnet durch** einen mit einem der Greifarme (40) gekoppelten Signalgeber, der ein übermäßiges Zufahren der Greifarme erkennbar macht.
